Europäisches Patentamt

European Patent Office

Office européen des brevets

(11) Veröffentlichungsnummer: **0 261 443**
**A1**

## (12) EUROPÄISCHE PATENTANMELDUNG

(21) Anmeldenummer: 87112577.9

(22) Anmeldetag: 28.08.87

(51) Int. Cl.⁴: **B60R 25/10**

(30) Priorität: 28.08.86 DE 8623044 U

(43) Veröffentlichungstag der Anmeldung:
30.03.88 Patentblatt 88/13

(84) Benannte Vertragsstaaten:
AT BE CH DE ES FR GB GR IT LI LU NL SE

(71) Anmelder: **Helmut Händel & Partner**
**Messdatentechniek KG Ringstrasse 6**
**D-8031 Eichenau(DE)**

(72) Erfinder: **Händel, Helmut**
**Ringstrasse 6**
**D-8031 Eichenau(DE)**

(74) Vertreter: **Patentanwälte Grünecker,**
**Kinkeldey, Stockmair & Partner**
**Maximilianstrasse 58**
**D-8000 München 22(DE)**

(54) **Kraftfahrzeug mit Inklinometer.**

(57) Bei diesem Kraftfahrzeug ist ein Inklinometer für eine Diebstahlsicherung vorgesehen, enthaltend ein Gehäuse mit einer Montagevorrichtung zur Anbringung an dem Kraftfahrzeug, ein Pendel, das in dem Gehäuse um eine vorgegebene, im wesentlichen horizontale Achse schwenkbar aufgehängt ist, und in dem Gehäuse ortsfest angeordnete elektrische Schaltkreiselemente mit veränderlichen elektrischen Eigenschaften, die von der jeweiligen Schwenkstellung des Pendels bestimmt sind, wobei die Besonderheit darin besteht, daß die Schwenkachse (5) des Pendels (3,4) in einem schrägen Winkel ( ) zur Längsachse (7) des Fahrzeugs verläuft.

Fig. 2

## Kraftfahrzeug mit Inklinometer

Die Erfindung bezieht sich auf ein Kraftfahrzeug mit einem daran befestigten Inklinometer für eine Diebstahlsalarmanlage, enthaltend ein Gehäuse mit einer Montagevorrichtung zur Anbringung an dem Kraftfahrzeug, ein Pendel, das in dem Gehäuse um eine vorgegebene, im wesentlichen horizontale Achse schwenkbar aufgehängt ist, und in dem Gehäuse ortsfest angeordnete elektrische Schaltkreiselemente mit veränderlichen elektrischen Eigenschaften, die von der jeweiligen Schwenkstellung des Pendels bestimmt sind.

Es sind Diebstahlsalarmanlagen für Kraftfahrzeuge bekannt, die ansprechen, wenn nach dem "Scharfmachen" der Warnanlage das Fahrzeug aus seiner Lage, die es nach dem Abstellen einnimmt, bewegt wird, indem beispielsweise das Fahrzeug einseitig angehoben wird, um eines der Räder abzunehmen. Eine solche Veränderung ändert die Winkellage des Fahrzeugs gegenüber dem Untergrund und kann daher mit Hilfe von Inklinometern meßtechnisch erfaßt werden, um einen Alarm auszulösen.

Inklinometer für diese Zwecke enthalten ein Gehäuse, das an dem Fahrzeug befestigt ist und in dem ein Pendel um eine vorgegebene, im wesentlichen horizontale Achse schwenkbar aufgehängt ist, und in dem Gehäuse ortsfest angeordnete elektrische Schaltkreiselemente mit veränderlichen Eigenschaften, welche Eigenschaften von der jeweiligen Schwenkstellung des Pendels bestimmt sind. Beispielsweise sind solche Schaltkreiselemente Induktionsspulen, die Bestandteil eines Schaltkreises sind, und das Pendel enthält einen Magneten, der die Selbstinduktion dieser Spulen oder die magnetische Kopplung zwischen verschiedenen, benachbart angeordneten Spulen beeinflußt.

Wenn man durch Ansetzen eines Wagenhebers an der Seite des Fahrzeugs das Fahrzeug seitlich anhebt, bleibt die Richtung, die seine Längsachse annimmt, im wesentlichen unverändert. Ein Inklinometer, dessen Schwenkachse senkrecht zur Fahrzeuglängsachse ausgerichtet ist, wird daher bei einer solchen Lageveränderung des Fahrzeugs nicht ansprechen. Entsprechend wird ein Inklinometer, dessen Pendelschwenkachse parallel zur Fahrzeuglängsachse angeordnet ist, nicht ansprechen, wenn das Fahrzeug vorn oder hinten so angehoben wird, daß beide Vorderräder bzw. Hinterräder gleichzeitig den Bodenkontakt verlassen. Aus diesem Grunde enthalten Fahrzeuge, deren Neigungsveränderung meßtechnisch erfaßt werden soll, zwei Inklinometer der vorgenannten Art, die für die Erfassung der unterschiedlichen Neigungskomponenten vorgenannter Art bestimmt sind. Es ist augenscheinlich, daß eine solche Diebstahlsalarmanlage wegen der Verwendung zweier Inklinometer sehr aufwendig ist.

Der Erfindung liegt die Aufgabe zugrunde, ein Kraftfahrzeug der eingangs genannten Art anzugeben, bei dem die bei versuchtem Diebstahl in aller Regel zu erwartenden Neigungsänderungen des Fahrzeugs mit vereinfachten Maßnahmen erfaßbar sind.

Diese Aufgabe wird erfindungsgemäß dadurch gelöst, daß die Pendelschwenkachse des einzigen Inklinometers mit der Längsachse des Fahrzeugs einen schrägen Winkel ein schließt, der vorzugsweise in der Größenordnung von 45° liegt.

Es wird auf diese Weise sichergestellt, daß sowohl beim seitlichen Anheben des Fahrzeugs als auch beim Anheben des Fahrzeugs vorn oder hinten derart, daß beide Vorderräder bzw. beide Hinterräder den Boden verlassen, das Pendel in dem Inklinometer sich bewegt und dementsprechend einen Alarm auslösen kann.

Die bevorzugte Einbaurichtung des Inklinometers ist derart, daß die Pendelschwenkachse und die Fahrzeuglängsachse einen Winkel von etwa 45° einschließen, weil hierdurch für beide Schwenkrichtungen des Fahrzeugkörpers eine gleiche Ansprechempfindlichkeit erreicht wird.

Das Inklinometer kann am Fahrgestell des Fahrzeugs montiert sein, beispielsweise an der Hinterachse oder an der Vorderachse. Besonders vorteilhaft ist es, wenn das Inklinometer an der gefederten Masse des Fahrzeugs befestigt ist, weil es dann bereits zum Ansprechen gebracht werden kann, bevor eines der Räder den Bodenkontakt verliert und vom Fahrzeug unbefugterweise demontiert werden kann.

Die Erfindung wird nachfolgend unter Bezugnahme auf die Zeichnungen näher erläutert. Es zeigt:

Fig. 1 eine schematische Darstellung einer Ausführungsform eines Inklinometers, und

Fig. 2 schematisch in Draufsicht ein Personenkraftfahrzeug mit einem daran befestigten Inklinometer.

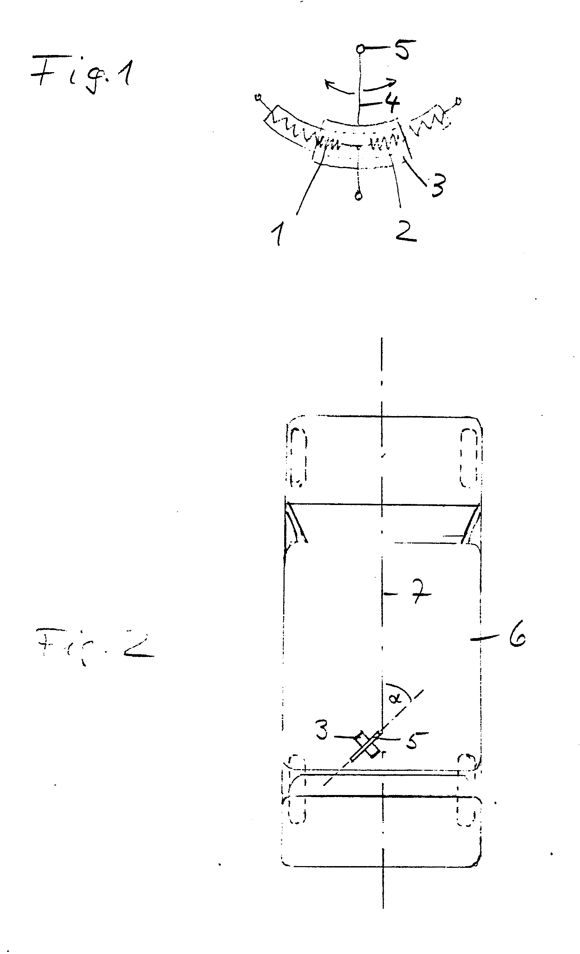

Das Inklinometer nach Fig. 1 ist bekannter Art und besteht aus Induktionsspulen 1 und 2, die Bestandteil einer elektrischen Auswerteschaltung (nicht dargestellt) sind, und einem Pendel 3 in Form eines Magneten, der an einem Pendelstab 4 um eine Schwenkachse 5 schwenkbar in einem Gehäuse aufgehängt ist, das die Induktionsspulen 1 und 2 trägt. Der Magnet 3 ist in der Lage, die Selbstinduktion der Spulen 1 und 2 sowie die magnetische Kopplung zwischen denselben in Abhängigkeit von seiner Stellung zu verändern.

In Fig. 2 erkennt man ein Personenkraftfahrzeug 6 mit einer Längsachse 7. An dem Personenkraftwagen ist, vorzugsweise an versteckter, nicht frei zugänglicher Stelle, ein Inklinometer befestigt, dessen Pendelschwenkachse 5 im wesentlichen horizontal angeordnet ist und mit der Fahrzeuglängsachse 7 einen schrägen Winkel α von vorzugsweise 45° einschließt. Wenn das Fahrzeug an der Seite, vorn oder hinten angehoben wird, verändert aufgrund der Schwerkraftwirkung das von dem Magneten 3 und dem Stab 4 gebildete Pendel seine Lage in bezug auf die Spulen 1 und 2 und ruft damit eine Veränderung von deren elektrischen Eigenschaften hervor, die mittels der nicht gezeigten Auswerteschaltung meßtechnisch erfaßbar ist.

Untersuchungen mit Hilfe eines handelsüblichen Inklinometers mit einem Meßbereich von ± 10° haben gezeigt, daß, wenn das Inklinometer im Bereich der Vorderachse so montiert ist, daß seine Pendelschwenkachse einen Winkel von 45° mit der Längsachse des Fahrzeugs einschließt, ein seitliches Anheben des Fahrzeugs an der Vorderachse eine Veränderung der Ausgangsspannung am Inklinometer von 0,1 V hervorruft, was meßtechnisch ohne jede Schwierigkeit erfaßbar ist. Wird das Fahrzeug seitlich an der Hinterachse angehoben, ergeben sich Änderungen der Inklinometerausgangsspannung beim Anheben um 7 cm in der gleichen Größenordnung.

Bei Verwendung eines handelsüblichen Inklinometers mit einem Meßbereich von ± 30°, in gleicher Weise montiert, ergeben sich Änderungen der Ausgangsspannung in der Größenordnung von 0,03 V beim Anheben des Fahrzeugs in gleichem Ausmaß. Auch eine solche Spannungsänderung ist meßtechnisch noch erfaßbar, doch ist augenscheinlich, daß für den praktischen Gebrauch dem empfindlicheren Inklinometer der Vorzug zu geben ist.

Das Inklinometer selbst ist zweckmäßigerweise so ausgestaltet, daß es nur unter einem vorgegebenen Winkel seiner Pendelschwenkachse in bezug auf die Fahrzeuglängsachse am Fahrzeug montierbar ist, zu welchem Zweck es eine entsprechende Montagevorrichtung aufweist, die beispielsweise eine Hauptebene beschreibt, die im schrägen Winkel von vorzugsweise 45° zur Schwenkachse des Pendels verläuft.

**Ansprüche**

1. Kraftfahrzeug mit einem daran befestigten Inklinometer für eine Diebstahlsalarmanlage, enthaltend ein Gehäuse mit einer Montagevorrichtung zur Anbringung an dem Kraftfahrzeug, ein Pendel, das in dem Gehäuse um eine vorgegebene, im wesentlichen horizontale Achse schwenkbar aufgehängt ist, und in dem Gehäuse ortsfest angeordnete elektrische Schaltkreiselemente mit veränderlichen elektrischen Eigenschaften, die von der jeweiligen Schwenkstellung des Pendels bestimmt sind, **dadurch gekennzeichnet,** daß die Schwenkachse (5) des Pendels (3, 4) in einem schrägen Winkel (α) zur Längsachse (7) des Fahrzeugs verläuft.

2. Kraftfahrzeug nach Anspruch 1, **dadurch gekennzeichnet,** daß der Winkel ( ) zwischen 30° und 60°, vorzugsweise in der Größenordnung von 45° liegt.

3. Kraftfahrzeug nach Anspruch 1 oder 2, **dadurch gekennzeichnet,** daß das Inklinometer (1-5) am Fahrgestell des Fahrzeugs (6) befestigt ist.

4. Kraftfahrzeug nach Anspruch 3, **dadurch gekennzeichnet,** daß das Inklinometer (1-5) an der Vorderachse des Fahrzeugs (6) befestigt ist.

5. Kraftfahrzeug nach Anspruch 3, **dadurch gekennzeichnet,** daß das Inklinometer (1-5) an der Hinterachse des Fahrzeugs (6) befestigt ist.

6. Kraftfahrzeug nach Anspruch 1 oder 2, **dadurch gekennzeichnet,** daß das Inklinometer (1-5) an der gefederten Masse des Fahrzeugs (6) befestigt ist.

7. Inklinometer für ein Kraftfahrzeug nach einem der vorhergehenden Ansprüche, enthaltend ein Gehäuse mit einem darin um eine Schwenkachse - schwenkbar gelagerten Pendel und in dem Gehäuse ortsfest angeordneten elektrischen Schaltkreiselementen mit veränderlichen elektrischen Eigenschaften, die von der jeweiligen Schwenkstellung des Pendels bestimmt sind, **dadurch gekennzeichnet,** daß an dem Gehäuse Montageeinrichtungen zur Befestigung des Gehäuses an dem Fahrzeug ausgebildet sind, die eine vorbestimmte Einbaurichtung festlegen, in der die Schwenkachse (5) des Pendels (3, 4) einen Winkel ( ) von etwa 45° zur Fahrzeuglängsachse (7) einnimmt.

Fig.1

Fig. 2

Europäisches Patentamt

**EUROPÄISCHER RECHERCHENBERICHT**

Nummer der Anmeldung

EP 87 11 2577

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 011 087 (BOSCH GmbH) <br> * Seite 10, Zeile 29 - Seite 11, Zeile 12; Figur 4 * <br> --- | 1,3,6,7 | B 60 R 25/10 |
| A | DE-A-3 431 989 (KOLLER) <br> * Seite 11, Zeile 12 - Seite 11, Zeile 12; Figuren 1-4 * <br> --- | 1,3,6,7 | |
| A | DE-C- 591 908 (SIEMENS AG) <br> * Seite 2, Zeilen 99-113; Figuren * <br> ----- | 1 | |

**RECHERCHIERTE SACHGEBIETE (Int. Cl.4)**

B 60 R
H 01 H
G 01 C
G 01 P

Der vorliegende Recherchenbericht wurde für alle Patentansprüche erstellt

| Recherchenort | Abschlußdatum der Recherche | Prüfer |
|---|---|---|
| DEN HAAG | 07-12-1987 | MAUSSER, T. |